# EUROPÄISCHE PATENTSCHRIFT

(11) **EP 3 822 753 B1**
(45) Veröffentlichungstag und Bekanntmachung des Hinweises auf die Patenterteilung: **26.10.2022**
(21) Anmeldenummer: 20209599.8
(22) Anmeldetag: 12.01.2018
(51) Int. Cl.: G06F 3/044, G06F 3/0362, B60K 37/06, G05G 1/10, G05G 5/06

(54) **BEDIENVORRICHTUNG FÜR EIN KRAFTFAHRZEUG**
OPERATING DEVICE FOR A MOTOR VEHICLE
DISPOSITIF DE COMMANDE POUR UN VÉHICULE AUTOMOBILE

(30) Priorität: 25.01.2017 DE 102017101412
(43) Veröffentlichungstag der Anmeldung: 19.05.2021
(62) Teilanmeldung aus: 18700656.4
(73) Patentinhaber: Behr-Hella Thermocontrol GmbH, 59557 Lippstadt (DE)
(72) Erfinder: Fischer, Christoph, 59557 Lippstadt (DE); Schwab, Tobias, 59557 Lippstadt (DE)
(74) Vertreter: dompatent von Kreisler Selting Werner - Partnerschaft von Patent- und Rechtsanwälten mbB

(56) Entgegenhaltungen:
- DE-A1-102014 218 493
- US-A1- 2014 042 004

## Beschreibung

Die Erfindung betrifft eine Bedienvorrichtung für ein Kraftfahrzeug mit einem Touch-Panel, das eine Oberseite mit einer berührungssensitiven Oberfläche aufweist und auf dem eine Bedieneinheit angeordnet ist, die ein translatorisch oder rotatorisch bewegbares, manuell erfassbares Bedienelement aufweist.

Touch-Panels und insbesondere Touch-Screens haben sich als Bedienvorrichtungen für Fahrzeuge in den letzten Jahren mehr und mehr durchgesetzt. Mitunter komfortabler allerdings ist die Eingabe von Bedienbefehlen durch manuell erfassbare Bedienelemente, die rotatorisch (als Drehsteller) oder translatorisch (als Schieber) bewegbar und gegebenenfalls mit Drückfunktionen versehen sind.

Es ist bereits verschiedentlich beschrieben worden, manuell betätigbare Bedienelemente mit Touch-Panels bzw. Touch-Screens zu kombinieren. Beispiele hierfür sind in DE-C-197 43 283, DE-A-10 2006 043 208, DE-A-10 2010 010 574, DE-A-10 2011 007 112 und EP-A-2 302 799 beschrieben. Bei den bekannten Bedienvorrichtungen bewegt sich ein mit dem Bedienelement gekoppeltes Geberelement auf der berührungssensitiven Oberfläche des Touch-Panels, um dessen Berührungssensorik für die Ermittlung der aktuellen Bewegungsposition des Bedienelements zu nutzen. Wünschenswert ist es mitunter, dass das Bedienelement vom Benutzer wahlweise an verschiedenen Stellen des Touch-Panels positioniert werden kann. Geberelemente, die sich auf der Oberfläche des Touch-Panel bewegen, können zu Beschädigungen und Abnutzungen der berührungssensitiven Oberfläche des Touch-Panel führen (Kratzer, Schleifspuren etc.), was vermieden werden sollte.

Ein Dekoder zur Erzeugung binär-codierter Signale bei Verstellung eines Einstellknopfes ist z. B. aus DE-U-20 2012 007 093 bekannt. Ein Drehwahl- und Bedienvorrichtung ist aus DE-A-10 2014 113 877 bekannt.

Aus US-A-2014/0042004 ist eine Bedienvorrichtung nach dem Oberbegriff des Anspruchs 1 bekannt.

Aufgabe der Erfindung ist es, eine Bedienvorrichtung mit einem Touch-Panel und einer manuell zu betätigenden Bedieneinheit zu schaffen, ohne dass die Oberfläche des Touch-Panels in Mitleidenschaft gezogen wird.

Zur Lösung dieser Aufgabe wird mit der Erfindung eine Bedienvorrichtung für ein Fahrzeug vorgeschlagen, die versehen ist mit
- einem kapazitiv arbeitenden Touch-Panel, das eine Oberseite mit einer berührungssensitiven Oberfläche aufweist, und
- einer Bedieneinheit , die ein translatorisch oder rotatorisch bewegbares, manuell erfassbares Bedienelement mit einer elektrisch leitenden Oberfläche und ein mit einer Oberseite und einer dieser abgewandten Unterseite versehenes, plattenförmiges Halteelement aufweist, an welchem das Bedienelement bewegbar angeordnet ist und welches seinerseits auf der berührungssensitiven Oberfläche der Oberseite des Touch-Panels angeordnet ist,
- wobei das Bedienelement mindestens ein mit der elektrisch leitenden Oberfläche des Bedienelements elektrisch verbundenes Bewegungs-Detektionsgeberelement in Form vorzugsweise eines Schleifers aufweist, das bei Bewegung des Bedienelements auf einer Abtastbahn der Oberseite des Halteelements entlang gleitet,
- wobei das Halteelement längs der Abtastbahn mehrere erste Abschnitte und mehrere zweite Abschnitte aufweist, die wechselweise aufeinanderfolgen, und
- wobei die Ober- und die Unterseite des Halteelements in den ersten Abschnitten jeweils miteinander elektrisch leitend verbunden und in den zweiten Abschnitten jeweils voneinander elektrisch isoliert sind.

Bei dieser Bedienvorrichtung ist ferner erfindungsgemäß vorgesehen,
- dass das Bedienelement eine Rasteinrichtung mit mindestens einem elastischen oder reversibel bewegbaren Rastelement und einer Rastbahn mit abwechselnd aufeinanderfolgend angeordneten Rasterhöhungen und Rastvertiefungen aufweist,
- dass das mindestens eine Rastelement an dem Bedienelement und die Rastbahn an dem Halteelement angeordnet ist und
- dass die Abtastbahn des Halteelements als Rastbahn der Rasteinrichtung ausgebildet ist und die Rasterhöhungen sowie die Rastvertiefungen aufweist, wobei das mindestens eine Rastelement als Bewegungs-Detektionsgeberelement fungiert.

Nach der Erfindung ist also vorgesehen, dass auf der berührungssensitiven Oberfläche des Touch-Panel ein plattenförmiges Halteelement angeordnet ist, auf dessen Oberseite mindestens ein Bewegungs-Detektionsgeberelement in z.B. Form eines Schleifers aufliegt, der bei Bewegung des Bedienelements mitbewegt wird. Der Schleifer (nachfolgend ist ohne Beschränkung der Allgemeinheit der möglichen Ausgestaltungen des mindestens einen Bewegungs-Detektionsgeberelements überwiegend von dessen Ausführungsform als Schleifer die Rede) gleitet dabei entlang einer Abtastbahn auf der Oberseite des Halteelements. Wenn das Bedienelement als Drehsteller ausgeführt ist, so handelt es sich bei der Abtastbahn um eine Kreisbahn. Die Beschaffenheit des Materials des Halteelements entlang dessen Abtastbahn ist erfindungsgemäß derart, dass die Abtastbahn wechselweise erste und zweite Abschnitte aufweist. In den ersten Abschnitten ist die Oberseite des Halteelements elektrisch mit der Unterseite des Halteelements verbunden, während das Halteelement im Bereich der zweiten Abschnitte elektrisch isolierend ist. Beispielsweise ist das plattenförmige Halteelement aus Kunststoff gefertigt, wobei die ersten Abschnitte der Abtastbahn durch Materialblöcke realisiert sind, die elektrisch leitend sind. Beispielsweise könnte dem Kunststoffmaterial des Halteelements im Bereich der ersten Abschnitte elektrisch leidendes Material wie z.B. Ruß zugefügt sein. Vorzugsweise handelt es sich bei dem Haltelement also um Zweikomponenten-(2K-)Halteelement.

Die ersten Abschnitte bilden entlang der Abtastbahn einzelne durch die zweiten Abschnitte voneinander getrennt Flächenbereiche, die mit beispielsweise entsprechend großen, d.h. gleich großen Flächenbereichen an der Unterseite des Halteelements fluchten. Der mindestens eine Schleifer ist elektrisch mit der elektrisch leitenden Oberfläche des Bedienelements verbunden ist. Dadurch weist der mindestens eine Schleifer bei manueller Berührung des Bedienelements das elektrische Potential bzw. die elektrische Ladung des Bedieners auf (oder anders ausgedrückt wirkt der Schleifer als Masse). Wenn nun der Schleifer bei Bewegung des Bedienelements über die Abtastbahn entlanggleitet, bis das Bedienelement in einer Bewegungsposition verharrt, in der der mindestens eine Schleifer auf einem ersten Abschnitt der Abtastbahn anliegt, so kann durch die Übertragung der elektrischen Ladung von der Oberseite des Halteelements über den besagten ersten Abschnitt auf die Unterseite des Halteelements und von dort auf die Oberfläche des Touch-Panel durch dessen Sensorik erfasst werden, womit die Bewegungsposition des Bedienelements detektierbar ist. Vorzugsweise weist das Bedienelement mindestens zwei Schleifer auf, die entsprechend versetzt zueinander angeordnet sind, so dass in jeder Bewegungsposition das Bedienelements genau einer der Schleifer auf einem elektrisch leitenden ersten Abschnitt der Abtastbahn ruht. Z. B. kann durch entsprechende Softwaresteuerung dann, wenn die Sensorik des Touch-Panel keine Veränderung der Schleiferpositionen detektiert, ermittelt werden, dass das Bedienelement in eine Bewegungsposition überführt ist, um dann diese Bewegungsposition auszulesen.

Nach der Erfindung sind mehrere erste Abschnitte und mehrere zweite Abschnitte wechselweise aufeinanderfolgend längs der Abtastbahn angeordnet und bilden diese.

Der Vorteil der erfindungsgemäßen Bedienvorrichtung besteht unter anderem also darin, dass der oder die Schleifer nicht mehr auf der berührungssensitiven Oberfläche des Touch-Panel entlang gleiten und diese Oberfläche mechanisch beeinträchtigen können. Dies ist insbesondere bei all den Applikationen von Vorteil, bei denen das Bedienelement an unterschiedlichen Positionen auf der berührungssensitiven Oberfläche des Touch-Panels positioniert werden können. Bei einer derartigen Applikation lässt sich das Bedienelement also beispielsweise auf der berührungssensitiven Oberfläche verfahren, und zwar mitsamt dem Halteelement. Das Halteelement kann beispielsweise magnetisch auf der Oberfläche des Touch-Panels positioniert und fixiert sein. Reversibel lösbare Klebeverbindungen sind ebenfalls als Halterung für das Halteelement auf dem Touch-Panel denkbar. Schließlich eignen sich auch pneumatische Systeme wie beispielsweise Saugnäpfe o.dgl.

Wie bereits oben beschrieben, kann das Bedienelement als Drehsteller oder als Schieber ausgebildet sein. Das Bedienelement ist also entweder rotatorisch drehbar oder translatorisch bewegbar an dem Halteelement gelagert. Im erstgenannten Fall kann das Halteelement einen aufragenden Kragen aufweisen, dessen Achse die Drehachse des Drehstellers bildet. Bei einer translatorisch bewegbaren Anordnung von Bedienelement und Halteelement kann dieses einen aufragenden Steg aufweisen, an dem das Bedienelement, d.h. der Schieber verschiebbar geführt ist. Andere Führungssysteme, insbesondere solche, die den Schieber nicht zwingend auf einer linearen Bahn, sondern beispielsweise auf einer gekrümmten Bahn verschiebbar führen, sind ebenfalls realisierbar. Im Sinne der Erfindung ist also mit "translatorisch" nicht notwendigerweise eine Linearbewegung, sondern auch eine Bewegung längs einer Kurve oder eine aus Kurven und geradlinigen Abschnitten zusammengesetzte Bewegung gemeint.

Zur Steigerung des Bedienkomforts des manuell bewegbaren Bedienelements ist nach der Erfindung vorgesehen, dass das Bedienelement eine Rasteinrichtung mit mindestens einem elastischen oder reversibel bewegbaren Rastelement und einer Rastbahn mit abwechselnd aufeinanderfolgend angeordneten Rasterhöhungen und Rastvertiefungen aufweist, wobei das mindestens eine Rastelement an dem Bedienelement und die Rastbahn an dem Halteelement angeordnet ist.

Hinsichtlich einer kompakten Anordnung und reduzierter Montagekosten ist nach der Erfindung vorgesehen, dass die Abtastbahn des Halteelements als Rastbahn der Rasteinrichtung ausgebildet ist und die Rasterhöhungen sowie die Rastvertiefungen aufweist. Die Abtastbahn übernimmt bei dieser Ausgestaltung der Erfindung also auch die Funktion der Rastbahn. Der Schleifer bzw. die beiden Schleifer dienen dann als Rastelemente. In jeder Rastvertiefung kontaktiert der mindestens eine Schleifer demzufolge genau einen elektrisch leitenden ersten Abschnitt der Abtastbahn. Sofern das Bedienelement über eine Drückfunktion verfügt, kontaktiert also das Drück-Detektionsgeberelement einen elektrisch leitenden Bereich des Halteelements, bei dem es sich zweckmäßigerweise um einen ersten Abschnitt der als Rastbahn ausgebildeten Abtastbahn handelt. Wird das Bedienelement nicht gedrückt, so befindet sich das mindestens eine Dreh-Detektionsgeberelement mit Abstand über der Rast- und Abtastbahn.

In vorteilhafter Weiterbildung der Erfindung kann also, wie bereits oben angedeutet, vorgesehen sein, dass das Bedienelement zwei längs der Abtastbahn versetzt zueinander angeordnete Schleifer aufweist, wobei sich der Versatz zwischen den beiden Schleifern über eine Länge erstreckt, die gleich der Erstreckung aufeinanderfolgender erster und zweiter Abschnitte mit entweder einer gradzahligen Anzahl von ersten Abschnitten und einer ungradzahligen Anzahl von zweiten Abschnitten oder einer ungradzahligen Anzahl von ersten Abschnitten und einer gradzahligen Anzahl von zweiten Abschnitten ist, wobei in jeder Bewegungsposition des Bedienelements einer der beiden Schleifer einen ersten Abschnitt der Abtastbahn kontaktiert. Durch Anordnung zweier Bewegungs-Detektionsgeberelemente lässt sich nunmehr nicht nur eine Bewegung des Bedienelements, sondern auch dessen Bewegungsrichtung erkennen.

Neben dem erfindungsgemäß vorgesehenen mindestens einen Bewegungs-Detektionsgeberelement kann das Bedienelement in vorteilhafter Weiterbildung der Erfindung ferner ein Drück-Detektionsgeberelement aufweisen, das erst im niedergedrückten Zustand des Bedienelements einen (von mehreren) die Oberseite des Halteelements mit dessen Unterseite elektrisch verbindenden lokalen Bereich des Halteelements kontaktiert. Das Bedienelement ist also in Richtung auf das Halteelement reversibel niederdrückbar und vorzugsweise automatisch in entgegengesetzter Richtung wieder zurückbewegbar, wenn auf das Bedienelement keine Niederdrückkraft ausgeübt wird. Die besagten lokalen Bereiche sind z.B. zusätzlich zu den ersten Abschnitten des Halteelements an und/oder in diesem ausgebildet/angeordnet.

Bei der zuvor genannten Ausgestaltung der Erfindung ist es insbesondere zweckmäßig, wenn der jeweilige im niedergedrückten Zustand des Bedienelements durch das mindestens eine Drück-Detektionsgeberelement kontaktierte elektrische Bereich des Halteelements einer der ersten Abschnitte des Halteelements ist.

Wie bereits oben im Zusammenhang mit den Schleifern beschrieben, kann es zweckmäßig sein, wenn das Bedienelement zwei längs der Abtastbahn versetzt angeordnete Drück-Detektionsgeberelemente aufweist, wobei in jeder Bewegungsposition des Bedienelements mindestens eines der beiden Drück-Detektionsgeberelemente einen ersten Abschnitt der Abtastbahn kontaktiert. Von Vorteil kann es bei einer derartigen doppelten Anordnung von Drück-Detektionsgeberelementen sein, wenn sich der Versatz zwischen den beiden Drück-Detektionsgeberelementen über eine Länge erstreckt, die gleich der Erstreckung aufeinanderfolgender erster und zweiter Abschnitte mit entweder einer gradzahligen Anzahl von ersten Abschnitten und einer ungradzahligen Anzahl von zweiten Abschnitten oder einer ungradzahligen Anzahl von ersten Abschnitten und einer gradzahligen Anzahl von zweiten Abschnitten ist.

In weiterer zweckmäßiger Ausgestaltung der Erfindung kann es von Vorteil sein, dass der mindestens eine Schleifer eine Verformung oder ein Element ist, die oder das integraler Bestandteil eines geraden oder ringförmigen, elektrisch leitenden Federmaterialstreifens ist und von diesem vorsteht oder absteht. An diesem Federmaterialstreifen oder aber an einem zusätzlich vorgesehenen Federmaterialstreifen kann das mindestens eine Drück-Detektionsgeberelement in Form ebenfalls einer Verformung oder eines Elements ausgeführt sein.

Weniger vorteilhaft ist es, wenn die Rastbahn als von der Abtastbahn räumlich getrennte Anordnung von Rasterhebungen und Rastvertiefungen ausgebildet ist. Das reversibel bewegbare Rastelement, das auch in zweifacher Ausgestaltung über die Rastbahn gleitend angeordnet sein kann, ist beispielsweise an einem Federmaterialstreifen ausgeführt oder als Rastkugel o.dgl. ausgestaltet. Das Bedienelement nimmt nun immer dann eine stabile Ruheposition ein, wenn das Rastelement in eine Rastvertiefung eingetaucht ist. In diesen Ruhepositionen kontaktiert der Schleifer also stets einen elektrisch leitenden ersten Abschnitt der Abtastbahn des Halteelements. Wenn zwei Schleifer vorgesehen sind, so kontaktiert jeweils genau ein Schleifer in jeder durch die Rastvertiefungen definierten Ruheposition des Bedienelements einen ersten Abschnitt des Halteelements.

In weiterer vorteilhafter Ausgestaltung der Erfindung kann vorgesehen sein, dass sich jeder längs der Abtastbahn angeordnete erste und zweite Abschnitt des Halteelements von der Mitte einer Rastvertiefung bis zur Mitte einer benachbarten Rastvertiefung oder von der Mitte einer Rasterhöhung bis zur Mitte einer benachbarten Rasterhöhung erstreckt.

Je nach den Designanforderungen kann es erforderlich sein, dass die Bedieneinheit lediglich teilweise auf der berührungssensitiven Oberfläche der Oberseite des Touch-Panels bzw. des Touch-Screen angeordnet ist. Damit entsteht ein Überlappungsbereich, innerhalb dessen sich das Halteelement auf dem Touch-Panel bzw. Touch-Screen befindet. Zur Gewährleistung der zuvor beschriebenen Sensierung einer (Rotations- oder Translations-)Bewegung des Bedienelements und/oder einer Drückbewegung des Bedienelements ist es insoweit erforderlich, dass in jeder Bewegungsposition des Bedienelements zumindest eines der Bewegungs-Detektionsgeberelemente und, sofern vorhanden, zumindest eines der Drück-Detektionsgeberelemente in demjenigen Bereich der Oberseite des Halteelements positioniert ist, unterhalb dessen sich die berührungssensitive Oberfläche der Oberseite des Touch-Panels befindet. Soll neben der reinen Bewegung auch die Bewegungsrichtung sensiert werden können, so ist es ferner zweckmäßig, in jeder Bewegungsposition des Bedienelements zwei der Bewegungs-Detektionsgeberelemente und, sofern vorhanden, mindestens eines der Drück-Detektionsgeberelemente in demjenigen Bereich der Oberseite des Halteelements positioniert sind, unterhalb dessen sich die berührungssensitive Oberfläche der Oberseite des Touch-Panels befindet.

Nachfolgend werden verschiedene Ausführungsbeispiele der Erfindung anhand der Zeichnung näher erläutert. Im Einzelnen zeigen dabei:
- Fig. 1: eine Ansicht auf die Mittelkonsole eines Fahrzeugs mit einem Touch-Screen und einer darauf angeordneten Drehsteller-Bedieneinheit,
- Fig. 2: die Drehsteller-Bedieneinheit in Seitenansicht,
- Fig. 3: eine perspektivische Ansicht der Drehsteller-Bedieneinheit gemäß einem ersten Ausführungsbeispiel bei abgenommenem Drehbedienelement,
- Fig. 4: eine Draufsicht auf das auf dem Touch-Screen angeordneten Halteelement der Drehsteller-Bedieneinheit nach Fig. 3,
- Fig. 5: eine Seitenansicht auf den in Fig. 4 durch den Doppelpfeil angedeuteten Umfangsbereich als Abwicklung,
- Fign. 6 und 7: Querschnitte durch das Halteelement samt Drehbedienelement entlang der Linien VI-VI und VII-VII der Fig. 4,
- Fig. 8: eine Draufsicht auf einen Touch-Screen mit darauf angeordneter Schiebe-Bedieneinheit gemäß einem zweiten Ausführungsbeispiel,
- Fign. 9 bis 11: Schnittansichten entlang der Linien IX-IX, X-X und XI-XI der Fig. 8,
- Fig. 12: eine perspektivische Ansicht eines dritten Ausführungsbeispiels einer Drehsteller-Bedieneinheit,
- Fig. 13: eine Draufsicht auf das Halteelement der Bedieneinheit gemäß Fig. 12,
- Fig. 14: eine Seitenansicht auf den in Fig. 13 durch den Doppelpfeil angedeuteten Umfangsbereich als Abwicklung,
- Fig. 15: eine perspektivische Darstellung eines vierten Ausführungsbeispiels eines Bedienelements,
- Fig. 16: eine Draufsicht auf das Halteelement der Bedieneinheit gemäß Fig. 15 und
- Fig. 17: eine Seitenansicht auf den in Fig. 16 durch den Doppelpfeil angedeuteten Umfangsbereich als Abwicklung.

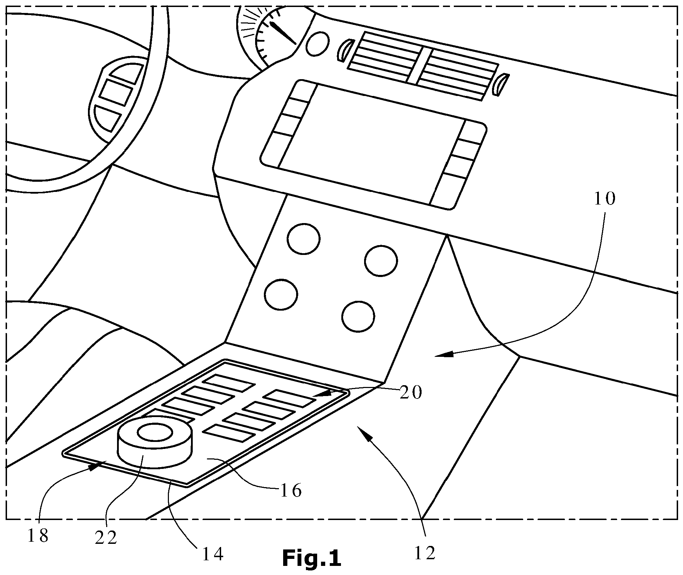

In Fig. 1 ist in perspektivischer Ansicht der Bereich um die Mittelkonsole 10 eines Fahrzeugs gezeigt. Die Mittelkonsole 10 ist mit einer Bedieneinheit 12 versehen, die einen Touch-Screen 14 mit einem Touch-Panel 16 und einer auf dem Touch-Screen 14 angeordneten Bedieneinheit 18 aufweist. Bei 20 sind diverse Schaltflächen angedeutet, die auf dem Touch-Screen 14 dargestellt sind.

In diesem Ausführungsbeispiel ist die Bedieneinheit als Drehsteller 22 ausgeführt.

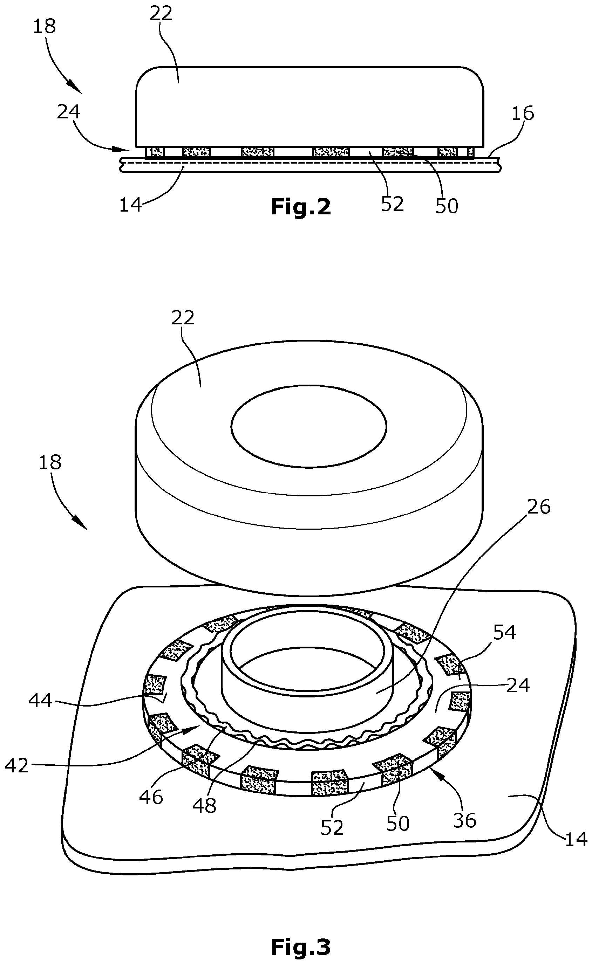

Ein erstes Ausführungsbeispiel der Dreh-Bedieneinheit 18 wird nachfolgend unter Bezugnahme auf die Fign. 2 bis 7 erläutert.

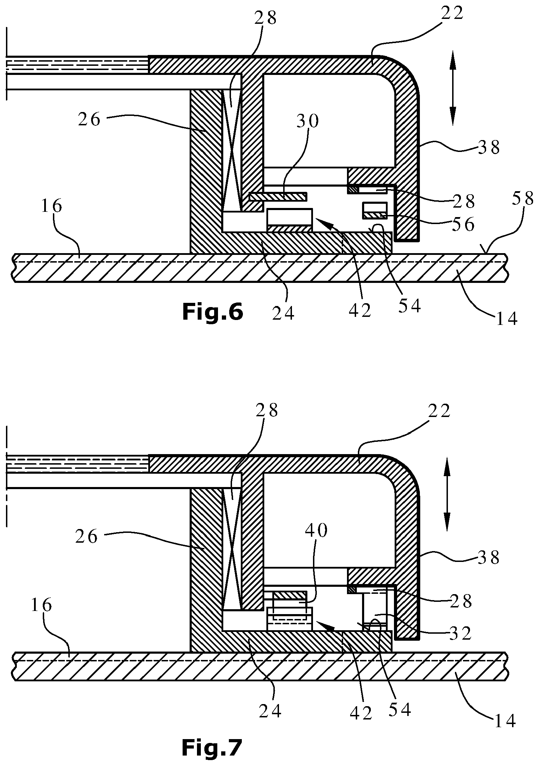

Gemäß den Fign. 2 und 3 weist die Bedieneinheit 18 ein plattenförmiges Halteelement 24 aus dielektrischem Material, beispielsweise Kunststoff, auf, das in diesem Ausführungsbeispiel in Form einer Scheibe mit einem aufragenden Kragen 26 ausgestaltet ist. Zwischen dem Kragen 26 und dem Drehsteller 22 befindet sich ein Dreh-Drücklager 28 (siehe Fign. 6 und 7). An der Unterseite des Drehstellers 22 befinden sich zwei kreisringförmige Federmaterialstreifen 28,30, von denen der äußere Federmaterialstreifen 28 zwei Schleifer 32 als Dreh- bzw. Bewegungs-Detektionsgeberelemente 34 aufweist, die im Außenrandbereich 36 des Halteelements 24 auf diesem entlang gleiten, wenn der Drehsteller 22 manuell verdreht wird. Der Drehsteller 22 ist mit einer elektrisch leitenden Materialschicht 38 versehen, die sich teilweise bis zur Unterseite des Drehstellers 22 erstreckt (siehe Fign. 6 und 7). Mit dieser elektrisch leitenden Materialschicht 38 ist der äußere Federmaterialstreifen 28 elektrisch verbunden.

Der innere Federmaterialstreifen 30 weist zwei Rastvorsprünge 40 auf, die auf einer Rastbahn 42 auf der Oberseite 44 des Haltelements 24 entlang gleiten. Die Rastbahn 42 ist mit Rasterhöhungen 46 und Rastvertiefungen 48 versehen. Durch die Ausgestaltung des inneren Federmaterialstreifens 30 mittels der Rastvorsprünge 40 wirkt dieser wie eine Rastfeder für die mechanische Haptik des Drehstellers 22 bei Verdrehung. Der Drehsteller 22 nimmt damit definierte Ruhepositionen ein.

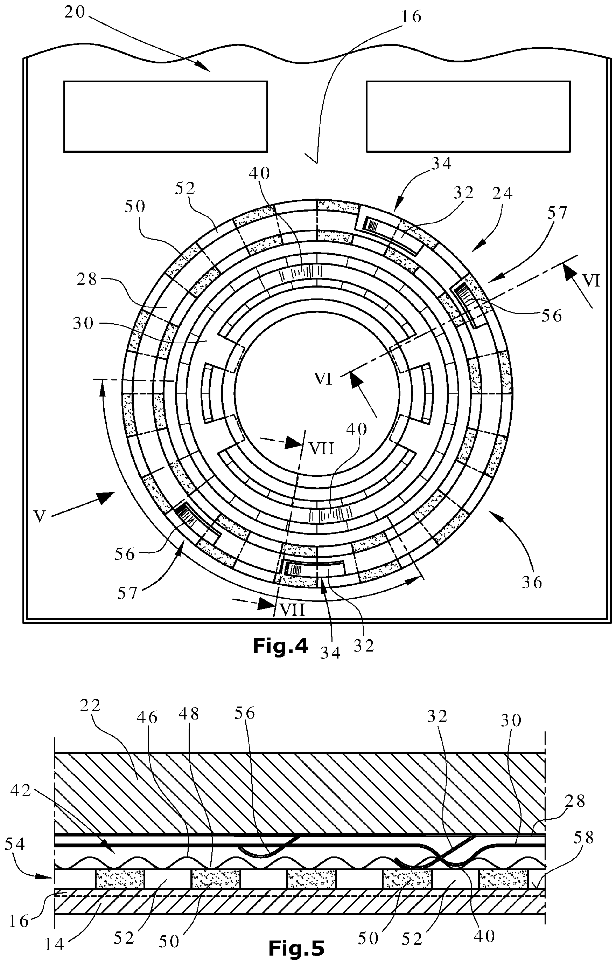

Um nun die Drehposition des Drehstellers 22 in den verschiedenen Ruhepositionen mittels des Touch-Panel 16 erkennen zu können, weist das Halteelement 24 in seinem Außenrandbereich 36 abwechselnd elektrisch leitende erste Abschnitte 50 sowie elektrisch isolierende zweite Abschnitte 52 auf. Die Aufeinanderfolge dieser ersten und zweiten Abschnitte 50, 52 bildet eine Abtastbahn 54, auf der die beiden Schleifer 32 entlang gleiten. Der Versatz der beiden Schleifer 32 in Umfangsrichtung ist dergestalt, dass in jeder durch eine Rastvertiefung 48 definierten Ruheposition des Drehstellers 22 einer der beiden Schleifer 32 auf einem elektrisch leitenden ersten Abschnitt 50 ruht (siehe z.B. Fig. 5).

Wie anhand der Fign. 6 und 7 erkennbar ist, lässt sich der Drehsteller 22 niederdrücken. Im niedergedrückten Zustand wird die Abtastbahn 54 an vorzugsweise zwei Stellen von zwei Zungen 56 des äußeren Federmaterialstreifens 28 kontaktiert, die als Drück-Detektionsgeberelemente 57 fungieren. Wie anhand von Fig. 5 zu erkennen ist, befinden sich diese Zungen 56 im nicht gedrückten Zustand des Drehstellers 22 oberhalb der Abtastbahn 54 und kontaktieren die Abtastbahn 54 nur dann, wenn der Drehsteller 22 gedrückt wird. Dann liegt wiederum eine der beiden Zungen 56 auf einem elektrisch leitenden ersten Abschnitt (vorausgesetzt, dass der Drehsteller 22 ein durch die Rastvertiefungen 48 definierte Ruheposition einnimmt).

Bei Erfassung des Drehstellers 22 nehmen die Schleifer 32 und die Zungen 56 das elektrische Potential bzw. die Ladung der Hand an. Genau einer der beiden Schleifer 32 kontaktiert stets einen der elektrisch leitenden ersten Abschnitte 50, wodurch über diesen die elektrische Ladung bzw. das elektrische Potential des äußeren Federmaterialstreifens 28 auf die Oberseite 58 des Touch-Panel 16 übertragen wird. Die kapazitive Sensorik (nicht dargestellt) des Touch-Panel 16 erkennt dann die Position, an der sich der besagte Schleifer 32 befindet, wodurch die Drehposition des Drehstellers 22 detektierbar ist. In gleicher Weise kann die Drückfunktion des Drehstellers 22 detektiert werden; dann nämlich liegt eine der beiden Zungen 56 auf einem der ersten, elektrisch leitenden Abschnitte 50 auf.

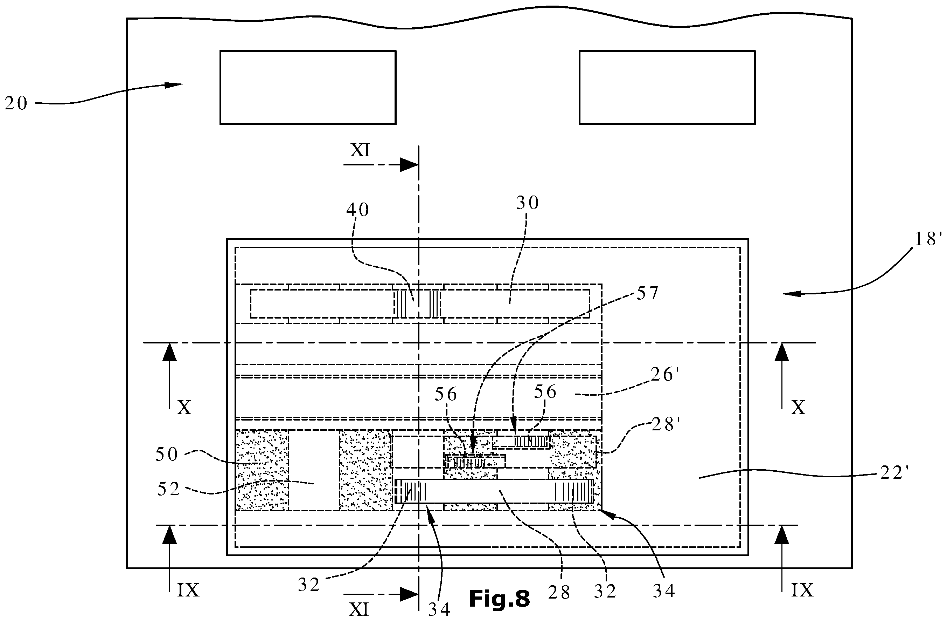

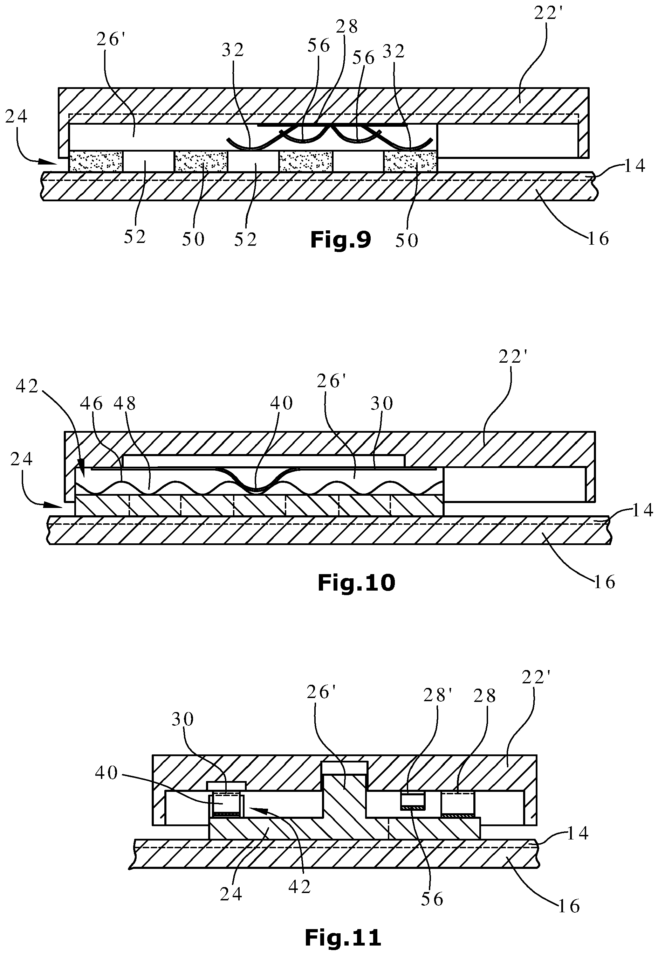

In den Fign. 8 bis 11 ist eine Ausführungsbeispiel der Erfindung dargestellt, bei dem die Bedieneinheit als Schiebe-Bedieneinheit 18' ausgeführt ist. Soweit die Elemente dieser Schiebe-Bedieneinheit 18' denjenigen der Dreh-Bedieneinheit 18 der Fign. 1 bis 7 entsprechen, sind sie in den Fign. 8 bis 11 mit dem gleichen Bezugszeichen wie in den Fign. 1 bis 7 versehen.

Bei der Schiebe-Bedieneinheit 18' ist das Bedienelement als Schiebeknopf 22' ausgeführt. Der Kragen 26 des Halteelements 24 gemäß den Fign. 2 bis 7 ist dabei ersetzt durch den Steg 26', der von dem in diesem Fall rechteckigen plattenförmigen Halteelement 24 aufragt. Die Ausbildung der ersten und zweiten Abschnitte der Abtastbahn sowie die Ausbildung der Rasteinrichtung der Schiebe-Bedieneinheit 18' ist entsprechend so gewählt, wie anhand der Fign. 2 bis 7 weiter oben beschrieben.

Im Unterschied zu der Ausgestaltung und Anordnung der Schleifer 32 und Zungen 56 bei dem Ausführungsbeispiel gemäß den Fign. 2 bis 7 sind diese Komponenten im Ausführungsbeispiel gemäß den Fign. 8 bis 11 auf zwei Federmaterialstreifen 28, 28' verteilt. Der Federmaterialstreifen 28' weist die Zungen 56 als Drück-Detektionsgeberelemente 57 auf, während der Federmaterialstreifen 28 die Schleifer 32 als Dreh-Detektionsgeber 34 aufweist.

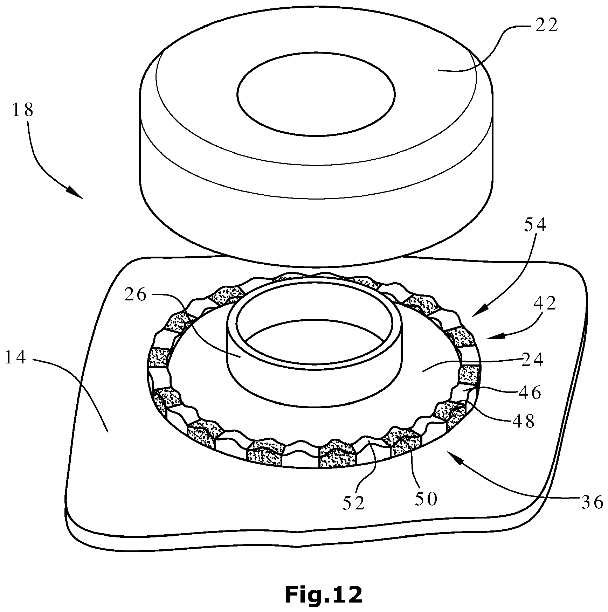

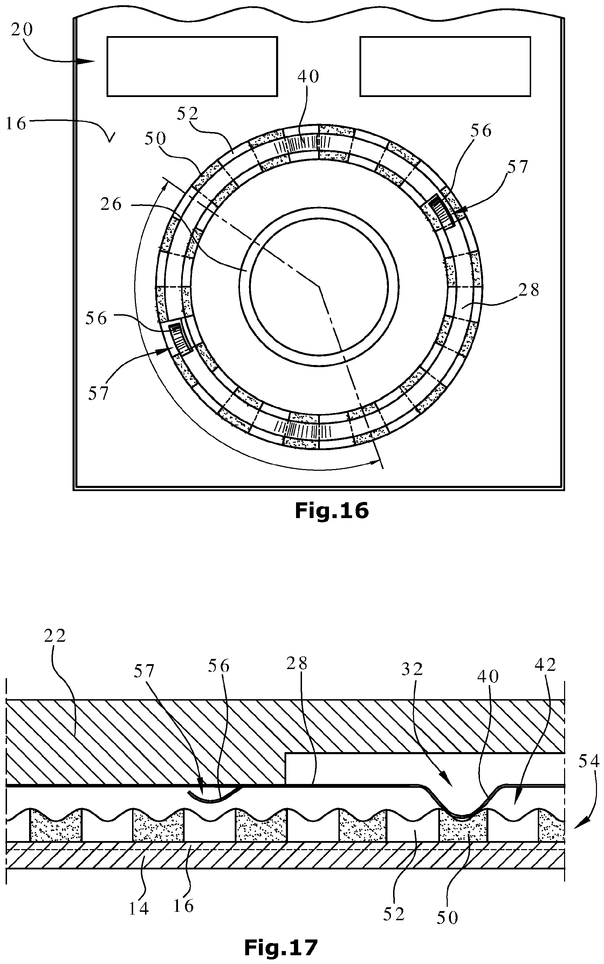

In den Fign. 12 bis 17 sind zwei weitere Ausführungsbeispiele eine Drehsteller-Bedieneinheit auf einem Touch-Panel gezeigt, deren Besonderheiten gegenüber den Ausführungsbeispielen der Fign. 1 bis 12 unter anderem darin bestehen, dass die Abtastbahn 54 auch sogleich die Funktion der Rastbahn 42 übernimmt, was hinsichtlich der Reduktion des erforderlichen Bauraums von Vorteil ist. Auch hinsichtlich der Fign. 12 bis 17 gilt, dass diejenigen Komponenten der Bedieneinheiten dieser beiden Ausführungsbeispiele, die denjenigen des Ausführungsbeispiels gemäß den Fign. 1 bis 7 entsprechen, mit den gleichen Bezugszeichen versehen sind.

Die zuvor genannte Besonderheit ist beispielsweise in Fig. 12 gezeigt. Das Halteelement 24 weist in seinem Außenrandbereich 36 die Abtastbahn 54 auf, die wiederum aus den elektrisch leitenden ersten Abschnitten 50 und aus den elektrisch isolierenden zweiten Abschnitten 52 zusammengesetzt ist, wobei beide Arten von Abschnitten wechselweise aufeinanderfolgen. Die beiden zuvor genannten Abschnitte bilden an ihrer Oberseite eine wellenförmige Rastbahn 42, die mit Rasterhöhungen 46 und Rastvertiefungen 48 versehen ist. An der Unterseite des Drehstellers 22 befindet sich ein einziger Federmaterialstreifen 28, in dem ein Rastvorsprung 40 ausgebildet ist, der zugleich auch die Funktion des Schleifers 32 als Dreh- bzw. Bewegungs-Detektionsgeberelement 34 übernehmen. Zusätzlich weist der Federmaterialstreifen 28 die Zungen 56 als Drück-Detektionsgeberelemente 57 auf.

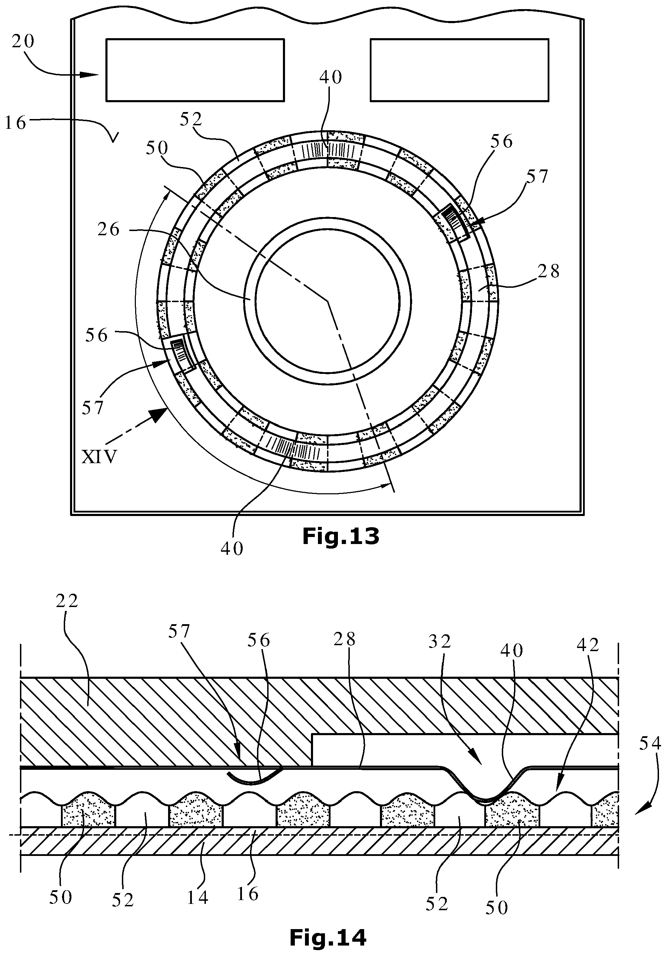

In jeder durch die Rastbahn 42 definierten Ruheposition des Drehstellers 22 kontaktiert der Rastvorsprung 40 einen elektrisch leitenden ersten Abschnitt 50 der Abtastbahn 54. Aus Symmetriegründen kann es von Vorteil sein, zwei Rastvorsprünge 40 vorzusehen. Durch Software kann ermittelt werden, welche Drehstellung der Drehsteller 22 aufweist. Hierzu ist es von Vorteil, wenn sich die beiden Rastvorsprünge 40 nicht exakt diametral gegenüberliegen (siehe Fig. 13).

Wenn der Drehsteller 22 gedrückt wird, kontaktieren die beiden Drück-Detektionsgeberelemente 57 ebenfalls die Rastbahn 42 bzw. die Abtastbahn 54, wobei genau eines der beiden Drück-Detektionsgeberelemente einen elektrisch leitenden ersten Abschnitt 50 kontaktiert.

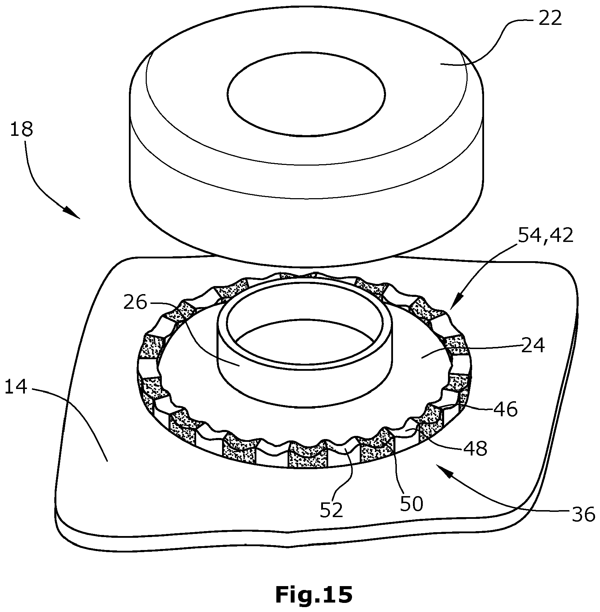

In den Fign. 15 bis 17 ist ein weiteres Ausführungsbeispiel einer Dreh-Bedieneinheit 18 gezeigt. Im Unterschied zu Ausgestaltung dieser Einheit gemäß den Fign. 12 bis 14 ist die Teilung der Abtastbahn 54 sowie der Rastbahn 42 in die elektrisch leitenden ersten Abschnitte 50 und die elektrisch isolierenden zweiten Abschnitte 52 verschieden gewählt. Bei diesem Ausführungsbeispiel kontaktiert in jeder durch die Rastvertiefungen 48 der Rastbahn 42 definierten Ruheposition des Drehstellers 22 immer nur einer von den beiden Rastvorsprüngen 40 einen ersten Abschnitt 50, wodurch eindeutig die Drehposition des Drehsteller 22 detektierbar ist. Die Drück-Detektionsgeberelemente 57 tauchen hierbei in Rastvertiefungen bzw. in eine der Rastvertiefungen 48 ein, wobei einer der beiden Drück-Detektionsgeberelemente 57 jeweils in eine Rastvertiefung 48 (erster Abschnitt 50) der Abtastbahn 54 eintaucht und somit die Drückfunktion detektierbar ist.

### BEZUGSZEICHENLISTE

- 10: Mittelkonsole
- 12: Bedieneinheit
- 14: Touch-Screen
- 16: Touch-Panel
- 18: Dreh-Bedieneinheit
- 18': Schiebe-Bedieneinheit
- 20: Schaltflächen
- 22: Drehsteller
- 22': Schiebeknopf
- 24: Halteelement
- 26: Kragen des Halteelements
- 26': Steg des Halteelements
- 27: Dreh-Drücklager
- 28: Federmaterialstreifen
- 28': Federmaterialstreifen
- 30: Federmaterialstreifen
- 32: Schleifer
- 34: Dreh- bzw. Bewegungsdetektionsgeberelement
- 36: Außenrandbereich des Halteelements
- 38: Materialschicht
- 40: Rastvorsprünge
- 42: Rastbahn
- 44: Oberseite des Halteelements
- 46: Rasterhöhungen
- 48: Rastvertiefungen
- 50: erste Abschnitte der Abtastbahn
- 52: zweite Abschnitte der Abtastbahn
- 54: Abtastbahn
- 56: Zungen
- 57: Drück-Detektionsgeberelement
- 58: Oberseite des Touch-Panel

## Patentansprüche

1. Bedienvorrichtung für ein Fahrzeug, mit
- einem kapazitiv arbeitenden Touch-Panel (16), das eine Oberseite (58) mit einer berührungssensitiven Oberfläche aufweist, und
- einer Bedieneinheit (18,18'), die ein translatorisch oder rotatorisch bewegbares, manuell erfassbares Bedienelement (22,22') mit einer elektrisch leitenden Oberfläche und ein mit einer Oberseite und einer dieser abgewandten Unterseite versehenes, plattenförmiges Halteelement (24) aufweist, an welchem das Bedienelement (22,22') bewegbar angeordnet ist und welches seinerseits auf der berührungssensitiven Oberfläche der Oberseite des Touch-Panels (16) angeordnet ist,
- wobei das Bedienelement (22,22') mindestens ein mit der elektrisch leitenden Oberfläche des Bedienelements (22,22') elektrisch verbundenes Bewegungs-Detektionsgeberelement (34) in Form vorzugsweise eines Schleifers (32) aufweist, das bei Bewegung des Bedienelements (22,22') auf einer Abtastbahn (54) der Oberseite des Halteelements (24) entlang gleitet,
- wobei das Halteelement (24) längs der Abtastbahn (54) wechselweise aufeinanderfolgende erste Abschnitte (50) und zweite Abschnitte (52) aufweist,
- wobei die Ober- und die Unterseite des Halteelements (24) in den ersten Abschnitten (50) jeweils miteinander elektrisch leitend verbunden und in den zweiten Abschnitten (52) jeweils voneinander elektrisch isoliert sind,
**dadurch gekennzeichnet,**
- **dass** das Bedienelement (22,22') eine Rasteinrichtung mit mindestens einem elastischen oder reversibel bewegbaren Rastelement (40) und einer Rastbahn (42) mit abwechselnd aufeinanderfolgend angeordneten Rasterhöhungen (46) und Rastvertiefungen (48) aufweist,
- **dass** das mindestens eine Rastelement (40) an dem Bedienelement (22,22') und die Rastbahn (42) an dem Halteelement (24) angeordnet ist und
- **dass** die Abtastbahn (54) des Halteelements (24) als Rastbahn (42) der Rasteinrichtung ausgebildet ist und die Rasterhöhungen sowie die Rastvertiefungen aufweist, wobei das mindestens eine Rastelement (40) als Bewegungs-Detektionsgeberelement (34) fungiert.

2. Bedienvorrichtung nach Anspruch 1, **dadurch gekennzeichnet, dass** das Bedienelement (22,22') zwei längs der Abtastbahn (54) versetzt zueinander angeordnete Bewegungs-Detektionsgeberelemente (34) aufweist, wobei sich der Versatz zwischen den beiden Bewegungs-Detektionsgeberelementen (34) über eine Länge erstreckt, die gleich der Erstreckung aufeinanderfolgender erster und zweiter Abschnitte (52) mit entweder einer gradzahligen Anzahl von ersten Abschnitten (50) und einer ungradzahligen Anzahl von zweiten Abschnitten (50) oder einer ungradzahligen Anzahl von ersten Abschnitten (50) und einer gradzahligen Anzahl von zweiten Abschnitten (52) ist, wobei in jeder Bewegungsposition des Bedienelements (22,22') einer der beiden Bewegungs-Detektionsgeberelemente (34) einen ersten Abschnitt der Abtastbahn (54) kontaktiert.

3. Bedienvorrichtung nach Anspruch 1 oder 2, **dadurch gekennzeichnet, dass** das Bedienelement (22,22') der Bedieneinheit (18,18') in Richtung auf das Halteelement (24) reversibel niederdrückbar ist und mindestens ein mit der elektrisch leitenden Oberfläche des Bedienelements (22,22') elektrisch verbundenes Drück-Detektionsgeberelement (57) aufweist, das im niedergedrückten Zustand des Bedienelements (22,22') einen die Oberseite des Halteelements (24) mit dessen Unterseite elektrisch verbindenden lokalen Bereich des Halteelements (24) kontaktiert.

4. Bedienvorrichtung nach Anspruch 3, **dadurch gekennzeichnet, dass** der jeweilige im niedergedrückten Zustand des Bedienelements (22,22') durch das mindestens eine Drück-Detektionsgeberelement (57) kontaktierte elektrische Bereich des Halteelements (24) einer der ersten Abschnitte (50) des Halteelements (24) ist.

5. Bedienvorrichtung nach Anspruch 4, **dadurch gekennzeichnet, dass** das Bedienelement (22,22') zwei längs der Abtastbahn (54) versetzt angeordnete Drück-Detektionsgeberelemente (57) aufweist, wobei in jeder Bewegungsposition des Bedienelements (22,22') mindestens einer der beiden Drück-Detektionsgeberelemente (57) einen ersten Abschnitt der Abtastbahn (54) kontaktiert.

6. Bedienvorrichtung nach Anspruch 5, **dadurch gekennzeichnet, dass** sich der Versatz zwischen den beiden Drück-Detektionsgeberelementen (57) über eine Länge erstreckt, die gleich der Erstreckung aufeinanderfolgender erster und zweiter Abschnitte (52) mit entweder einer gradzahligen Anzahl von ersten Abschnitten (50) und einer ungradzahligen Anzahl von zweiten Abschnitten (52) oder einer ungradzahligen Anzahl von ersten Abschnitten (50) und einer gradzahligen Anzahl von zweiten Abschnitten (52) ist.

7. Bedienvorrichtung nach einem der Ansprüche 1 bis 6, **dadurch gekennzeichnet, dass** das mindestens eine Bewegungs-Detektionsgeberelement (34) eine Formgebung aufweist oder ein Element ist, die oder das integraler Bestandteil eines geraden oder ringförmigen, elektrisch leitenden Federmaterialstreifens (28) ist und von diesem vorsteht oder absteht.

8. Bedienvorrichtung nach Anspruch 7 und einem der Ansprüche 3 bis 6, **dadurch gekennzeichnet, dass** das mindestens eine Drück-Detektionsgeberelement (57) eine Formgebung aufweist oder ein Element ist, die oder das integraler Bestandteil eines geraden oder ringförmigen, elektrisch leitenden Federmaterialstreifens (28) ist und von diesem vorsteht oder absteht.

9. Bedienvorrichtung nach einem der Ansprüche 1 bis 8, **dadurch gekennzeichnet, dass** sich jeder längs der Abtastbahn (54) angeordnete erste und zweite Abschnitte (50,52) des Halteelements (24) von der Mitte einer Rastvertiefung bis zur Mitte einer benachbarten Rastvertiefung (48) oder von der Mitte einer Rasterhöhung (46) bis zur Mitte einer benachbarten Rasterhöhung (46) erstreckt.

10. Bedienvorrichtung nach Anspruch 9, **dadurch gekennzeichnet, dass** das mindestens eine Rastelement (40) und das Drück-Detektionsgeberelement (57) in und/oder an demselben Federmaterialstreifen (28) ausgebildet sind.

11. Bedienvorrichtung nach einem der Ansprüche 1 bis 10, **dadurch gekennzeichnet, dass** das Bedienelement (22,22') als ein Schieber oder ein Drehsteller ausgebildet ist.

12. Bedienvorrichtung nach Anspruch 11, **dadurch gekennzeichnet, dass** der Schieber oder der Drehsteller niederdrückbar ist.

13. Bedienvorrichtung nach einem der Ansprüche 1 bis 12, **dadurch gekennzeichnet, dass** das Touch-Panel (16) als Teil eines Touchscreen (14) ausgeführt ist, auf dessen Anzeigeseite die Bedieneinheit (18,18') angeordnet ist.

14. Bedienvorrichtung nach einem der Ansprüche 1 bis 13, **gekennzeichnet durch** eine Force-Feedback-Funktionalität gegebenenfalls in Verbindung mit einer Force-Sense-Funktionalität des Touch-Panels (16) des Bedienelements (22,22') oder eines Touch-Screen (14).

15. Bedienvorrichtung nach einem der Ansprüche 1 bis 14, **dadurch gekennzeichnet, dass** das Halteelement (24) teilweise auf der berührungssensitiven Oberfläche der Oberseite des Touch-Panels (16) angeordnet ist, wobei in jeder Bewegungsposition des Bedienelements (22,22') zumindest eines der Bewegungs-Detektionsgeberelemente (34) und, sofern vorhanden, zumindest eines der Drück-Detektionsgeberelemente (57) in demjenigen Bereich der Oberseite des Halteelements (24) positioniert ist, unterhalb dessen sich die berührungssensitive Oberfläche der Oberseite des Touch-Panels (16) befindet.

16. Bedienvorrichtung nach Anspruch 15, **dadurch gekennzeichnet, dass** in jeder Bewegungsposition des Bedienelements (22,22') zwei der Bewegungs-Detektionsgeberelemente (34) und, sofern vorhanden, mindestens eines der Drück-Detektionsgeberelemente (57) in demjenigen Bereich der Oberseite des Halteelements (24) positioniert sind, unterhalb dessen sich die berührungssensitive Oberfläche der Oberseite des Touch-Panels (16) befindet.

## Claims

1. An operating device for a vehicle, comprising
- a capacitively operating touch panel (16) having an upper face (58) with a touch-sensitive surface, and
- an operating unit (18, 18') having a translatory or rotatably movable operating element (22, 22') which can be grasped manually and has an electrically conductive surface, and having a plate-shaped holding element (24), provided with an upper face and a lower face facing away from the upper face, on which the operating element (22, 22') is movably arranged and which for its part is arranged on the touch-sensitive surface of the upper face of the touch panel (16),
- wherein the operating element (22, 22') comprises at least one motion detection encoder element (34) electrically connected to the electrically conductive surface of the operating element (22, 22'), and which is preferably a wiper (32) sliding along a sensing path (54) of the upper face of the holding element (24) when the operating element is moved,
- wherein the holding element (24) comprises first sections (50) and second sections (52) along the sensing path (54) which are arranged alternately successively,
- wherein the upper and lower face of the holding element (24) are connected to each other in an electrically conductive manner in each of the first sections (50) and are electrically insulated from each other in each of the second sections (52),
**characterized in that**
- the operating element (22, 22') comprises a detent means with at least one elastically or reversibly movable detent element (40), and with a detent path (42) with alternately successively arranged detent protrusions (46) and detent recesses (48)
- the at least one detent element (40) is arranged on the operating element (22, 22') and the detent path (42) on the holding element (24) or vice versa, and
- that the sensing path (54) of the holding element (24) is adapted as a detent path (42) of the detent means, comprising the detent protrusions and the detent recesses, wherein the at least one detent element (40) serves as a motion detection encoder element (34).

2. The operating device according to claim 1, **characterized in that** the operating element (22, 22') comprises two motion detection encoder elements (34) arranged offset to each other along the sensing path (54), wherein the offset between the two motion detection encoder elements (34) extends along a length corresponding to the extension of successive first and second sections (52) with either an even number of first sections (50) and an uneven number of second sections (50), or an uneven number of first sections (50) and an even number of second sections (52), wherein, in each movement position of the operating element (22, 22'), one of the two motion detection encoder elements (34) contacts a first section of the sensing path (54).

3. The operating device according to claim 1 or 2, **characterized in that** the operating element (22, 22') of the operating unit (18, 18') can be pushed down reversibly in the direction of the holding element (24) and comprises at least one push detection encoder element (57), electrically connected to the electrically conductive surface of the operating element (22, 22'), which contacts a local area of the holding element (24) electrically connecting the upper face of the holding element (24) with its lower face if the operating element (22, 22') is in a pushed down state.

4. The operating device according to claim 3, **characterized in that** the respective electrical area of the holding element (24), contacted in a pushed down state of the operating element (22, 22') by the at least one push detection encoder element (57), is one of the first sections (50) of the holding element (24).

5. The operating device according to claim 4, **characterized in that** the operating element (22, 22') comprises two push detection encoder elements (57) arranged offset to each other along the sensing path (54), wherein, in each movement position of the operating element (22, 22'), at least one of the two push detection encoder elements (57) contacts a first section of the sensing path (54).

6. The operating device according to claim 5, **characterized in that** the offset between the two push detection encoder elements (57) extends along a length corresponding to the extension of successive first and second sections (52) with either an even number of first sections (50) and an uneven number of second sections (52), or an uneven number of first sections (50) and an even number of second sections (52).

7. The operating device according to any one of claims 1 to 6, **characterized in that** the at least one motion detection encoder element (34) has a shaping or is an element being an integral component of a linear or circular, electrically conductive spring material strip (28) and protruding or projecting therefrom.

8. The operating device according to claim 7 and any one of claims 3 to 6, **characterized in that** the at least one push detection encoder element (57) has a shaping or is an element being an integral component of a linear or circular, electrically conductive spring material strip (28) and protruding or projecting therefrom.

9. The operating device according to any one of claims 1 to 8, **characterized in that** each first and second section (50, 52) of the holding element (24), arranged along the sensing path (54), extends from the center of a detent recess to the center of an adjacent detent recess (48), or from the center of a detent protrusion (46) to the center of an adjacent detent protrusion (46).

10. The operating device according to claim 9, **characterized in that** the at least one detent element (40) and the push detection encoder element (57) are adapted in and/or on the same spring material strip (28).

11. The operating device according to any one of claims 1 to 10, **characterized in that** the operating element (22, 22') is adapted as a slider or a rotary adjuster.

12. The operating device according to claim 11, **characterized in that** the slider or the rotary adjuster can be pushed down.

13. The operating device according to any one of claims 1 to 12, **characterized in that** the touch panel (16) is adapted as part of a touch screen (14) on whose display side the operating unit (18, 18') is arranged.

14. The operating device according to any one of claims 1 to 13, **characterized by** a force-feedback function optionally in conjunction with a force-sense function of the touch panel (16) of the operating element (22, 22') or of a touch screen (14).

15. The operating device according to any one of claims 1 to 14, **characterized in that** the holding element (24) is partially arranged on the touch-sensitive surface of the upper face of the touch panel (16), wherein, in each movement position of the operating element (22, 22'), at least one of the motion detection encoder elements (34) and, if available, at least one of the push detection encoder elements (57) is positioned in the area of the upper face of the holding element (24) below which the touch-sensitive surface of the upper face of the touch panel (16) is located.

16. The operating device according to claim 15, **characterized in that**, in each movement position of the operating element (22, 22'), two of the motion detection encoder elements (34) and, if available, at least one of the push detection encoder elements (57) are positioned in the area of the upper face of the holding element (24) below which the touch-sensitive surface of the upper face of the touch panel (16) is located.

## Revendications

1. Dispositif de commande pour un véhicule, doté
- d'un panneau tactile (16) fonctionnant de manière capacitive, lequel comporte une face supérieure (58) dotée d'une surface sensible au toucher, et
- d'une unité de commande (18, 18'), laquelle comporte un élément de commande (22, 22') doté d'une surface électriquement conductrice mobile en translation ou en rotation et pouvant être saisi manuellement et un élément de maintien (24) en forme de plaque et prévu avec une face supérieure et une face inférieure à l'opposé de celle-ci, sur lequel l'élément de commande (22, 22') est disposé de manière mobile et lequel est disposé quant à lui sur la surface sensible au toucher de la face supérieure du panneau tactile (16),
- dans lequel l'élément de commande (22, 22') comporte au moins un élément capteur de détection de mouvement (34), de préférence sous forme d'un frotteur (32), relié électriquement à la surface électriquement conductrice de l'élément de commande (22, 22'), lequel glisse sur un trajet de balayage (54) de la face supérieure de l'élément de maintien (24) lors d'un mouvement de l'élément de commande (22, 22'),
- dans lequel l'élément de maintien (24) comporte le long du trajet de balayage (54) des premières sections (50) et des deuxièmes sections (52) en alternance,
- dans lequel la face supérieure et la face inférieure de l'élément de maintien (24) sont reliées respectivement l'une à l'autre de manière électriquement conductrice dans les premières sections (50) et sont électriquement isolées l'une de l'autre dans les deuxièmes sections (52),
**caractérisé**
- **en ce que** l'élément de commande (22, 22') comporte un dispositif d'encliquetage doté d'au moins un élément de cliquet (40) mobile de manière élastique ou réversible et un trajet d'encliquetage (42) doté d'élévations de cliquet (46) et de dépressions de cliquet (48) disposées en alternance,
- **en ce que** l'au moins un élément de cliquet (40) est disposé sur l'élément de commande (22, 22') et le trajet d'encliquetage (42) est disposé sur l'élément de maintien (24) et
- **en ce que** le trajet de balayage (54) de l'élément de maintien (24) est réalisé comme trajet d'encliquetage (42) du dispositif d'encliquetage et comporte les élévations de cliquet (46) ainsi que les dépressions de cliquet (48), dans lequel l'au moins un élément de cliquet (40) fonctionne comme élément capteur de détection de mouvement (34).

2. Dispositif de commande selon la revendication 1, **caractérisé en ce que** l'élément de commande (22, 22') comporte deux éléments capteurs de détection de mouvement (34) disposés en décalage l'un par rapport à l'autre le long du trajet de balayage (54), dans lequel le décalage entre les deux éléments capteurs de détection de mouvement (34) s'étend sur une longueur égale à l'étendue de premières et deuxièmes sections (52) consécutives avec ou bien un nombre pair de premières sections (50) et un nombre impair de deuxièmes sections (50) ou bien un nombre impair de premières sections (50) et un nombre pair de deuxièmes sections (52), dans lequel dans chaque position de mouvement de l'élément de commande (22, 22') un des deux éléments capteurs de détection de mouvement (34) entre en contact avec une première section du trajet de balayage (54).

3. Dispositif de commande selon la revendication 1 ou 2, **caractérisé en ce que** l'élément de commande (22, 22') de l'unité de commande (18, 18') est enfonçable de manière réversible dans la direction de l'élément de maintien (24) et comporte au moins un élément capteur de détection de pression (57) relié électriquement à la surface électriquement conductrice de l'élément de commande (22, 22'), lequel entre en contact avec une zone locale de l'élément de maintien (24) reliant électriquement la face supérieure de l'élément de maintien (24) à la face inférieure de celui-ci dans l'état enfoncé de l'élément de commande (22, 22').

4. Dispositif de commande selon la revendication 3, **caractérisé en ce que** la zone respective de l'élément de maintien (24) avec laquelle l'élément capteur de détection de pression (57) entre en contact dans l'état enfoncé de l'élément de commande (22, 22') est une des premières sections (50) de l'élément de maintien (24).

5. Dispositif de commande selon la revendication 4, **caractérisé en ce que** l'élément de commande (22, 22') comporte deux éléments capteurs de détection de pression (57) disposés en décalage le long du trajet de balayage (54), dans lequel au moins un des deux éléments capteurs de détection de pression (57) entre en contact avec une première section du trajet de balayage (54) dans chaque position de mouvement de l'élément de commande (22, 22').

6. Dispositif de commande selon la revendication 5, **caractérisé en ce que** le décalage entre les deux éléments capteurs de détection de pression (57) s'étend sur une longueur égale à l'étendue de premières et deuxièmes sections (52) consécutives avec ou bien un nombre pair de premières sections (50) et un nombre impair de deuxièmes sections (52) ou bien un nombre impair de premières sections (50) et un nombre pair de deuxièmes sections (52).

7. Dispositif de commande selon l'une des revendications 1 à 6, **caractérisé en ce qu'**au moins un élément capteur de détection de mouvement (34) présente une forme ou est un élément faisant partie intégrante d'une bande de matériau élastique électriquement conductrice (28) droite ou annulaire et fait saillie ou dépasse de celle-ci.

8. Dispositif de commande selon la revendication 7 et l'une des revendications 3 à 6, **caractérisé en ce qu'**au moins un élément capteur de détection de pression (57) présente une forme ou est un élément faisant partie intégrante d'une bande de matériau élastique électriquement conductrice (28) droite ou annulaire et fait saillie ou dépasse de celle-ci.

9. Dispositif de commande selon l'une des revendications 1 à 8, **caractérisé en ce que** chacune des premières et deuxièmes sections (50, 52) de l'élément de maintien (24) disposées le long du trajet de balayage (54) s'étend du milieu d'une dépression de cliquet jusqu'au milieu d'une dépression de cliquet (48) adjacente ou du milieu d'une élévation de cliquet (46) jusqu'au milieu d'une élévation de cliquet (46) adjacente.

10. Dispositif de commande selon la revendication 9, **caractérisé en ce que** l'au moins un élément de cliquet (40) et l'élément capteur de détection de pression (57) sont réalisés dans et/ou sur la même bande de matériau élastique (28).

11. Dispositif de commande selon l'une des revendications 1 à 10, **caractérisé en ce que** l'élément de commande (22, 22') est réalisé comme un curseur ou un actuateur rotatif.

12. Dispositif de commande selon la revendication 11, **caractérisé en ce que** le curseur ou l'actuateur rotatif est enfonçable.

13. Dispositif de commande selon l'une des revendications 1 à 12, **caractérisé en ce que** le panneau tactile (16) est configuré comme partie d'un écran tactile (14), sur le côté d'affichage duquel est disposée l'unité de commande (18, 18').

14. Dispositif de commande selon l'une des revendications 1 à 13, **caractérisé par** une fonction de retour de force le cas échéant reliée à une fonction haptique du panneau tactile (16) de l'élément de commande (22, 22') ou d'un écran tactile (14).

15. Dispositif de commande selon l'une des revendications 1 à 14, **caractérisé en ce que** l'élément de maintien (24) est disposé en partie sur la surface sensible au toucher de la face supérieure du panneau tactile (16), dans lequel dans chaque position de mouvement de l'élément de commande (22, 22') au moins un des éléments capteurs de détection de mouvement (34) et, pour autant qu'ils soient présents, au moins un des éléments capteurs de détection de pression (57) est positionné dans la zone de la face supérieure de l'élément de maintien (24) sous laquelle se trouve la surface sensible au toucher de la face supérieure du panneau tactile (16).

16. Dispositif de commande selon la revendication 15, **caractérisé en ce que** dans chaque position de mouvement de l'élément de commande (22, 22') deux des éléments capteurs de détection de mouvement (34) et, pour autant qu'ils soient présents, au moins un des éléments capteurs de détection de pression (57) sont positionnés dans la zone de la face supérieure de l'élément de maintien (24) sous laquelle se trouve la surface sensible au toucher de la face supérieure du panneau tactile (16).
